# EUROPÄISCHE PATENTSCHRIFT

(11) **EP 2 056 003 B1**
(45) Veröffentlichungstag und Bekanntmachung des Hinweises auf die Patenterteilung: **16.03.2011**
(21) Anmeldenummer: 08166687.7
(22) Anmeldetag: 15.10.2008
(51) Int. Cl.: F16J 15/26

(54) **Mehrteiliger Packungsring**
Multi-part packing ring
Bague d'étanchéité en plusieurs parties

(30) Priorität: 31.10.2007 AT 17632007
(43) Veröffentlichungstag der Anmeldung: 06.05.2009
(73) Patentinhaber: Hoerbiger Kompressortechnik Holding GmbH, 1220 Wien (AT)
(72) Erfinder: Lindner-Silwester, Tino, 1150 Wien (AT); Hold, Christian, 1170 Wien (AT); Jandl, Alexander, 3495 Rohrendorf (AT)
(74) Vertreter: Weiss, Christian

(56) Entgegenhaltungen:
- EP-A- 1 840 424
- DE-C- 689 434
- US-A- 1 338 206
- US-A- 1 669 074
- US-A- 4 350 349

## Beschreibung

Die gegenständliche Erfindung betrifft einen mehrteiligen Packungsring mit einer Anzahl von Ringsegmenten und einer Anzahl von Dichtsegmenten, die dichtenden aneinander liegend und einen Ring bildend angeordnet sind und radial innen gekrümmte Umfangsflächen aufweisen, wobei die Ringsegmente in Umfangsrichtung an beiden Enden durch erste radiale Endflächen begrenzt sind und an den Ringsegmenten im radial äußeren Bereich eine axial vorstehende Schulter vorgesehen ist, die radial innen durch eine tangentiale Dichtfläche begrenzt ist, sowie eine Druckpackung und eine Abdichtung umfassend einen solchen mehrteiligen Packungsring.

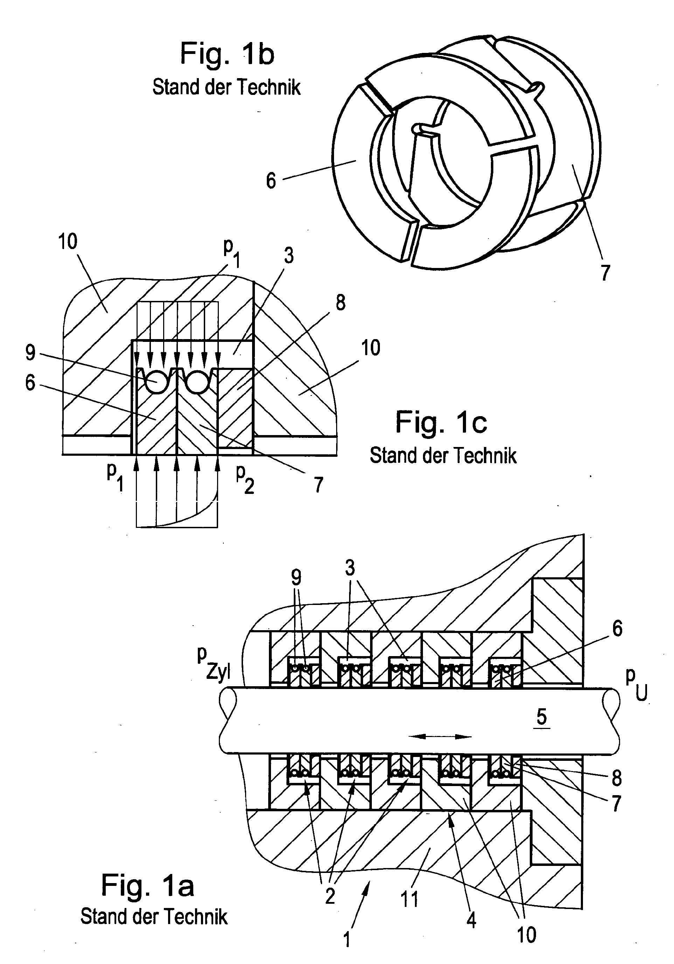

Kolbenkompressoren, vor allem in doppeltwirkender Bauweise, erfordern eine Abdichtung des kurbelseitigen Kompressionsraumes im Zylinder, in dem der zeitlich veränderliche (hohe) Zylinderdruck p_{zyl} herrscht, entlang der oszillierenden Kolbenstange 5. Diese Abdichtung hat typischerweise gegen den im Kurbelkasten herrschenden (niedrigen) Umgebungsdruck pᵤ zu erfolgen. Die Dichtelemente, die in einer solchen Abdichtung 4 zum Einsatz kommen, werden Packungsringe 6, 7 genannt und sind in einer sogenannten Druckpackung 2, in der Regel bestehend aus einer Anzahl von Packungsringen 6, 7, angeordnet, wie beispielhaft in herkömmlicher Ausführung in Fig. 1 dargestellt. Die Dichtelemente können dabei unvermeidlichen Lateralbewegungen der Kolbenstange 5 folgen, ohne ihre Dichtwirkung zu verlieren. Zur Erhöhung der Lebensdauer und Zuverlässigkeit einer Druckpackung 2 werden in einer Druckpackung 2 mehrere solcher Packungsringe 6, 7 in Serie geschaltet. In einer Abdichtung 4 werden in der Regel mehrer Druckpackungen hintereinander angereiht. Solche Druckpackungen 2 bzw. Abdichtungen 4 sind aus dem Stand der Technik in unterschiedlichsten Ausgestaltungen hinlänglich bekannt, z.B. aus der GB 928 749 A oder der US 1 008 655 A.

Packungsringe 6, 7 sind selbstaktivierende Dichtungen, die für eine ausreichende Dichtwirkung, also eine hinreichend kleine Leckage, in der Regel eine gewisse abzudichtende Druckdifferenz p₁ - p₂ benötigen (Fig. 1c). Der Gasdruck in einer Packungskammer 3 baut sich in den abzudichtenden Spalten eines Packungsringes 6, 7 vom höheren Niveau p₁ auf das niedrigere Niveau p₂ in der nächsten Packungskammer 3 ab. Fig. 1c zeigt schematisch diesen Druckabbau im zwischen Packungsring 6, 7 und Kolbenstange 5 gebildeten Dichtspalt. Diesem Dichtspalt kommt eine wesentliche Rolle im Hinblick auf die Leistungsfähigkeit der Packungsringe 6, 7 zu, da die Relativbewegung der Kontaktflächen zwischen Kolbenstange 5 und Ringen 6, 7 einen Verschleiß der Packungsringe 6, 7 hervorruft. Dieser Ringverschleiß erfordert in der Regel geschnittene Ringformen, die ein selbsttätiges kontinuierliches Nachstellen des Ringes bei Materialabtrag an diesem Dichtspalt Ring/Kolbenstange ermöglichen. Industriestandard sind dabei radial und tangential geschnittene Ringe 6, 7, welche paarweise in Packungskammern der Druckpackung eingesetzt werden, um die auftretenden Stoßspalte zur Verschleißkompensation gegenseitig abzudecken, wie in Fig. 1 b schematisch dargestellt. Solche radial/tangential geschnittenen Ringkombinationen sind einfachwirkende Dichtungen, welche nur in Richtung des Kreuzkopfes abdichten, während im Laufe der kurbelseitigen Reexpansionsphase des Kolbenkompressors 1 die radialen Schnitte sicherstellen, dass kein höherer Druck in der Packung eingeschlossen werden kann. Bei geschnittenen Ringformen kommen bekanntermaßen üblicherweise über den Außenumfang gewickelte Schlauchfedern (Umfangfedern) 9 zum Einsatz, welche die Packungsringe 6, 7 auch im drucklosen Zustand an die Kolbenstange 5 pressen.

Speziell bei höheren Drücken kann bei herkömmlichen Anordnungen auch eine nennenswerte Extrusion der Packungsringe 6, 7 in den zwischen Kolbenstange 5 und Packungsgehäuse bzw. Kammerscheibe 10 gebildeten Spalt auftreten. Zur weitmöglichsten Vermeidung dieser Extrusion können zwischen dem Ring auf der niedrigen Druckseite und der Kammerscheibe 10 zusätzliche metallische, die Kolbenstange 5 nicht flächig berührende Stützringe 8 verwendet werden, wie z.B. in der US 3 305 241 A offenbart.

Bei einer Kombination eines radial und eines tangential geschnittenen Packungsringes erfolgt die Abdichtung zur Kolbenstange hin im Wesentlichen nur durch den tangential geschnittenen Packungsring, dessen Ringsegmente sich durch die tangentiale Schnittführung bei Verschleiß zusammenschieben können und somit die Dichtwirkung beibehalten. Der radial geschnittene Packungsring dient im Wesentlichen nur dazu, die Verschleißspalte des tangentialen Packungsringes in axialer und radialer Richtung abzudichten. Der radiale Packungsring verschleißt nur so weit bis die Ringsegmente in Umfangsrichtung aneinander liegen. Die radial und tangential geschnittenen Packungsringe verschleißen somit unterschiedlich. Um zu verhindern, dass sich der radial und der tangential geschnittene Packungsring relativ zueinander verdrehen, was dazu führen kann, dass die Verschleißspalten des tangential geschnittenen Packungsringes nicht mehr abgedeckt sind und folglich die Dichtwirkung verloren gehen würde, muss zwischen den Ringen eine Verdrehsicherung vorgesehen sein. Eine solche Verdrehsicherung ist in der Regel als Stift ausgeführt, der in zugeordneten Ausnehmungen im radial und tangential geschnittenen Packungsring steckt. Durch den unterschiedlichen Verschleiß der radial und tangential geschnittenen Packungsringe wird ein solcher Stift aber mit fortlaufenden Verschleiß einer immer größeren Scherbeanspruchung unterworfen, was häufig dazu führt, dass der Stift bricht und damit die Verdrehsicherung und in weiterer Folge möglicherweise auch die Dichtwirkung der Abdichtung verloren geht.

In der DE 689 434 C wird eine Abdichtung aus zwei nebeneinanderliegenden Dichtringen gezeigt, wobei ein Ring aus zwei Keilstücken und zwei Druckstücken zusammengesetzt ist. Jedes Teilstück weit eine tangentiale Schnittfläche, an der die Teilstücke aneinander liegen, und eine radiale Schnittfläche, zwischen denen ein Verschleißspalt gebildet wird, auf. Um den axialen durchgehenden Verschleißspalt abzudichten, wird ein zweiter Ring axial anliegend und entsprechend versetzt angeordnet. Die beiden nebeneinander liegenden Ring verschließen aber mit unterschiedlichen Verschleißraten, da auf den niederdruckseitigen Ring eine größe radiale Druckdifferenz wirkt, als auf den hochdruckseitigen Ring.

Im Stand der Technik wurde auch schon vorgeschlagen, keine Packungsringkombination aus einem radial und tangential geschnittenen Packungsring vorzusehen, sondern nur einen einzigen Packungsring. Um einerseits die erforderliche Dichtwirkung zur Kolbenstange auch beim zwangsweise vorhandenen Verschleiß nicht zu verlieren und auch in axialer und radialer Richtung eine ausreichende Dichtung sicherstellen zu können, sind dazu speziell geschnittene Packungsringe erforderlich. Aus der US 2 208 976 A und der US 4 350 349 A sind solche Packungsringe bekannt. Beschrieben wird darin ein sechsteiliger Packungsring mit radial geschnittenen Ringsegmenten, die durch eine Umfangsfeder zusammengehalten werden. Zwischen den Ringsegmenten entstehen in Umfangsrichtung radiale Verschleißspalte. Um diese abzudichten ist an jedem Ringsegment eine axiale vorstehende Schulter vorgesehen, die radial innen durch eine tangentiale Dichtfläche begrenzt ist. Zwischen diesen Schultern entsteht somit eine axiale Ausnehmung. Um die Verschleißspalte in axialer und radialer Richtung abzudichten werden in diese Ausnehmung Dichtsegmente eingelegt, die mit tangentialen Endflächen an den tangentialen Dichtflächen anliegen und die Verschleißspalte abdecken. Diese Dichtsegmente werden durch eine weitere Umfangsfeder zusammengehalten: Sowohl Ringsegmente, als auch Dichtsegmente liegen dabei zur Abdichtung zur Kolbenstange hin im Wesentlichen (bis auf notwendige Verschleißspalte) über den gesamten Umfang an der Kolbenstange an. Das Problem eines solchen Packungsringes liegt aber darin, dass die Ringsegmente und die Dichtsegmente einem unterschiedlichen Verschleiß unterworfen sind. Die Ringsegmente werden an ihrem Außendurchmesser mit dem hochdruckseitigen hohen Gasdruck beaufschlagt, während an ihrem Innendurchmesser schon ein durch die Dichtsegmente abgebauter, kleinerer Gasdruck wirkt. Ähnlich wie bei radial/tangential geschnittenen Ringpaaren verschleißen somit die Ringsegmente rascher als die Dichtsegmente, womit das komplett zur Verfügung stehende Ringmaterial verschleißmäßig nicht optimal ausgenutzt wird. Diese ungleichmäßigen Verschleißraten bewirken überdies, dass die Flächenpressung zwischen den tangentialen Dichtflächen immer mehr abnimmt, bis nach mehr oder minder kurzer Zeit keine ausreichende Dichtwirkung mehr gegeben ist und die Leckage durch den Packungsring unakzeptabel groß wird.

Es ist daher eine Aufgabe der Erfindung, die oben beschriebenen Nachteile eines solchen Packungsringes zu beheben, insbesondere den Verschleiß eines solchen Packungsringes und die Leckage durch einen solchen Packungsring zu reduzieren und die Lebensdauer eines solchen Packungsringes folglich zu erhöhen.

Diese Aufgabe wird erfindungsgemäß dadurch gelöst, dass an den Dichtsegmenten ein axialer Vorsprung vorgesehen ist, der die radial innen liegende gekrümmte Umfangsfläche des Dichtsegments in axialer Richtung im Bereich des Vorsprungs verbreitert und der Vorsprung in Umfangsrichtung gesehen zwischen den Enden der Ringsegmente und zur Ausbildung von ersten Verschleißspalten beabstandet von den Enden der Ringsegmente angeordnet ist. Damit steht an den Dichtsegmenten in axialer Richtung mehr Material für den Verschleiß zur Verfügung. Bei gleich bleibender Flächenpressung (durch den an der äußeren Umfangsfläche anliegenden Druck) kann somit der Verschleiß der Dichtsegmente wirkungsvoll herabgesetzt werden. Die Ringsegmente liegen bei einer solchen Ausführung nur mehr über einen kleinen Bereich am abzudichtenden Bauteil an und dienen daher im Wesentlichen nur mehr der Abdichtung der Verschleißspalten zwischen den Dichtsegmenten.

Vorteilhaft ist an den Dichtsegmenten an ihren in Umfangsrichtung gesehenen Enden je eine tangentiale Endfläche und eine zweite radiale Endfläche vorgesehen, wobei die tangentialen Endflächen an den tangentialen Dichtflächen benachbarter Ringsegmente anliegen und die zweiten radialen Endflächen zur Ausbildung eines zweiten Verschleißspaltes einander zugewandt und beabstandet voneinander angeordnet sind. Bei einer solchen Anordnung wird erreicht, dass die Dichtsegmente, bis auf die entstehenden Verschleißspalte, über den gesamten Umfang am abzudichtenden Bauteil anliegen und damit im Wesentlichen die Dichtsegmente die Abdichtung zum abzudichtenden Bauteil übernehmen.

Ganz besonders vorteilhaft ist der mehrteilige Packungsring vierteilig mit zwei Ringsegmenten und zwei Dichtsegmenten ausgeführt, wobei die Ring- und Dichtsegmente jeweils gegenüberliegend angeordnet sind und die radial innen liegende Umfangsfläche der Dichtsegmente bis auf die ersten Verschleißspalte eine geschlossene Umfangsfläche bildet. Diese symmetrische, zweiteilige Schnittführung bewirkt ein Verschleißbild, bei dem die beiden Dichtsegmente radial nach innen wandern, sodass der größte Verschleiß in Segmentmitte auftritt, also im Bereich der größten Materialdicke, während an den beiden in Umfangsrichtung gesehenen Dichtsegmentenden die Steifigkeit der Dichtsegmente einen geringeren Verschleiß bewirkt. Damit kann der Verschleiß noch weiter reduziert werden. Darüber hinaus wird dadurch die Abdichtung zwischen den tangentialen Dichtflächen mit zunehmendem Verschleiß nicht schlechter, da die jeweils aneinander liegenden tangentialen Dichtflächen über die gesamte Lebensdauer hinweg in einer Ebene zu liegen kommen, womit die tangentialen Dichtflächen stets gleichmäßig aufeinander aufliegen. Andererseits verschleißen die Dichtsegmente an ihren beiden in Umfangsrichtung gesehenen Segmentenden aufgrund ihrer (im Wesentlichen) gleichbleibenden Steifigkeit nicht so stark, was zusammen mit dem geringeren Verschleiß der Dichtsegmente auch ein Öffnen der tangentialen Dichtflächen unterbindet.

Um die für den Verschleiß relevante Anpresskraft, mit der die Dichtsegmente an den abzudichtenden Bauteil gedrückt werden und damit den Verschleiß zu reduzieren, ist zum Druckausgleich an der radial innen liegenden Umfangsfläche eines Dichtsegments vorteilhaft eine Umfangsnut vorgesehen, die über eine Ausnehmung im Bereich des zweiten Verschleißspaltes mit einer zweiten radialen Dichtfläche des Dichtsegments verbunden ist.

Um das Neigen zum Kippen der Dichtsegmente zu reduzieren, wird an der radial innen liegenden Umfangsfläche eines Dichtsegments vorteilhaft eine Hochdrucknut vorgesehen, die über eine Ausnehmung mit der äußeren Umfangsfläche des Packungsringes oder über eine Ausnehmung im Bereich des zweiten Verschleißspaltes mit einer zweiten radialen Dichtfläche des Dichtsegments verbunden ist und zwischen Hochdrucknut und axialem Vorsprung eine Niederdrucknut vorgesehen ist, die über eine Ausnehmung mit der dem axialen Vorsprung abgewandten Stirnseite des Packungsringes verbunden wird.

Wenn in den Ringsegmenten und Dichtsegmenten an der Stirnseite mit dem axialen Vorsprung eine radiale Stufe vorgesehen wird, steht ein weiteres konstruktives Merkmal zur Verfügung, um durch gezieltes Herbeiführen einer gewissen radialen Biegesteifigkeit der Ring-und Dichtsegmente zu bewirken, dass diese Segmente sowohl auf dem abzudichtenden Bauteil, als auch auf den tangentialen Dichtflächen mit ausreichender Flächenpressung aufliegen. Durch eine solche radiale Stufe sind einerseits die in Umfangsrichtung gelegenen Enden der Ringsegmente nicht mehr vollständig mit dem Ringsegment verbunden, wodurch sich das Ringsegment besser an den abzudichtenden Bauteil anlegen und dadurch besser die Schnitte der Dichtsegmente abdichten kann. Andererseits sind damit die Enden der Dichtsegmente ebenfalls flexibler, was den Packungsring hinsichtlich der Dichtsituation unempfindlicher gegenüber etwaigen Formabweichungen macht. Die Abstützung der Dichtsegmente in Segmentmitte wird dadurch nicht beeinträchtigt.

Die gegenständliche Erfindung wird nachfolgend anhand der schematischen, beispielhaften, nicht einschränkenden und vorteilhafte Ausgestaltungen zeigenden Figuren 1 bis 10 beschrieben. Dabei zeigt
Fig. 1 eine bekannte herkömmliche Abdichtung mit einem radial und einen tangential geschnittenen Packungsring,
Fig. 2 eine dreidimensionale Ansicht eines erfindungsgemäßen Packungsringes,
Fig. 3 eine Explosionsdarstellung eines solchen Packungsringes in unterschiedlichen Ansichten,
Fig. 4 eine Explosionsdarstellung eines Packungsringes mit Druckausgleich in unterschiedlichen Ansichten,
Fig. 5 die dabei entstehende Druckverteilung,
Fig. 6 einen Packungsring mit alternativem Druckausgleich,
Fig. 7 die dabei entstehende Druckverteilung,
Fig. 8 und 9 eine schematische Darstellung des fortlaufenden Verschleißes an einem erfindungsgemäßen Packungsring und
Fig. 10 eine weitere Ausgestaltung eines erfindungsgemäßen Packungsringes.

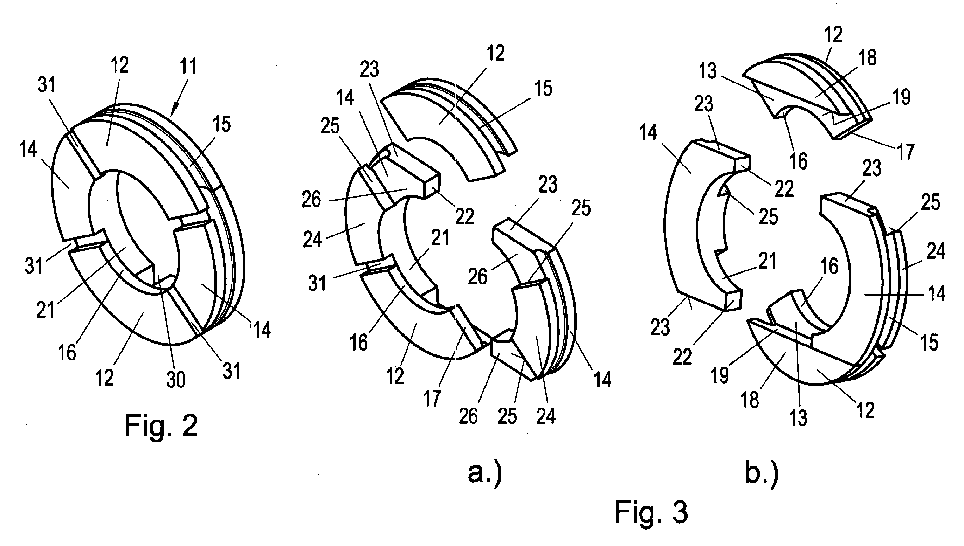

Eine bevorzugte Ausführung des mehrteiligen Packungsringes 11 in Form eines vierteiligen Ringes ist in Fig. 2 dargestellt. Derselbe Packungsring ist zum besseren Verständnis in den Figuren 3a und 3b in unterschiedlichen Ansichten in einer Explosionszeichnung dargestellt. Die folgende Beschreibung nimmt Bezug auf die Figs. 2 und 3.

Der Packungsring 11 besteht hier aus vier Teilen, zwei Ringsegmenten 12 und zwei Dichtsegmenten 14, die einen Ring bilden und dichtend aneinander liegen. In der äußeren Umfangsfläche der Ring- und Dichtsegmente 12, 14 kann eine Umfangsnut 15 eingearbeitet sein, in der eine Umfangsfeder zum Zusammenhalten der Segmente angeordnet werden kann. Die beiden Ringsegmente 12 bzw. Dichtsegmente 14 sind jeweils gegenüberliegend angeordnet.

Die Ringsegmente 12 haben radial innen eine gekrümmte, in der Regel eine kreisrunde, Umfangsfläche 16, die im Einsatz des Packungsringes 11 dichtend am abzudichtenden Bauteil, hier an der Kolbenstange des Kompressors, anliegt. An den Ringsegmenten 12 ist im radial äußeren Bereich des Ringsegments 12 weiters eine axiale vorstehende Schulter 18 vorgesehen, die radial innen durch eine tangentiale Dichtfläche 19 begrenzt ist. Zwischen tangentialer Dichtfläche 19 und Umfangsfläche 16 entsteht damit an der Stirnfläche auch eine erste radiale Dichtfläche 13. In Umfangsrichtung gesehen wird das Ringsegment 12 an beiden Enden durch eine erste radiale Endfläche 17 begrenzt.

Die Dichtsegmente 14 haben radial innen ebenfalls eine gekrümmte, in der Regel eine kreisrunde, Umfangsfläche 21, die im Einsatz des Packungsringes 11 dichtend am abzudichtenden Bauteil, hier an der Kolbenstange des Kompressors, anliegt. Die Dichtsegmente 14 werden in Umfangsrichtung gesehen an ihren beiden Enden durch eine zweite radiale Endfläche 22 und eine tangentiale Endfläche 23 begrenzt. Am Dichtsegment 14 ist weiters ein axialer Vorsprung 24 vorgesehen, der radial innen die Dichtfläche 21 in axialer Richtung verlängert. Dieser axiale Vorsprung 24 ist dabei an der der axialen Schulter 18 der Ringsegmente 12 gegenüberliegenden Stirnseite angeordnet. In Umfangsrichtung gesehen erstreckt sich der Vorsprung 24 nur über einen Teil des Dichtsegments 14 und wird an beiden Enden durch eine dritte radiale Endfläche 25 abgeschlossen. Es entsteht somit in Umfangrichtung eine Stufe. Zwischen dritter radialen Endfläche 25 und den Enden des Dichtsegments 14 entsteht somit an der Stirnseite eine zweite radiale Dichtfläche 26.

Im zusammengesetzten Zustand liegen an der tangentialen Dichtfläche 19 eines Ringsegments 12 die tangentialen Endflächen 23 der benachbarten Dichtsegmente 14 dichtend an. Weiters liegen an der ersten radialen Dichtfläche 13 des Ringsegments 12 die zweiten radialen Dichtflächen 26 der benachbarten Dichtsegmente 14 dichtend an. Dabei sind die zweiten radialen Endflächen 22 der Dichtsegmente 14 gegenüberliegend angeordnet und bilden einen Verschleißspalt 30 aus. Die inneren Umfangsflächen 21 der beiden Dichtsegmente 14 sind somit nahezu, bis auf die Verschleißspalte 30, geschlossen. Der axiale Vorsprung 24 der Dichtsegmente 14 ist zwischen den Enden der Ringsegmente 12 angeordnet. Die ersten radialen Endflächen 17 und die dritten radialen Endflächen 25 benachbarter Ring- und Dichtsegmente 12, 14 sind dabei zur Ausbildung eines ersten radialen Verschleißspaltes 31 einander zugewandt und beabstandet voneinander angeordnet. Die beiden Verschleißspalte 30, 31 sind damit an unterschiedlichen Stirnseiten des Packungsringes 11 angeordnet. Durch diese Anordnung der Ringsegmente 12 und Dichtsegmente 14 dichtet der mehrteilige Packungsring 11 sowohl in radialer, als auch axialer Richtung und an der inneren Umfangsfläche auch gegenüber dem abzudichtenden Bauteil, z.B. einer Kolbenstange, ab.

Der Packungsring 11 ist jedoch nicht auf einen vierteiligen Ring beschränkt, sondern kann auch aus mehr als vier Teilen, z.B. sechs oder acht, Teilen bestehen, wobei die Ausgestaltung der einzelnen Ringsegmente 12 und Dichtsegmente 14 und das Zusammenwirken der einzelnen Segmente analog zu oben ist.

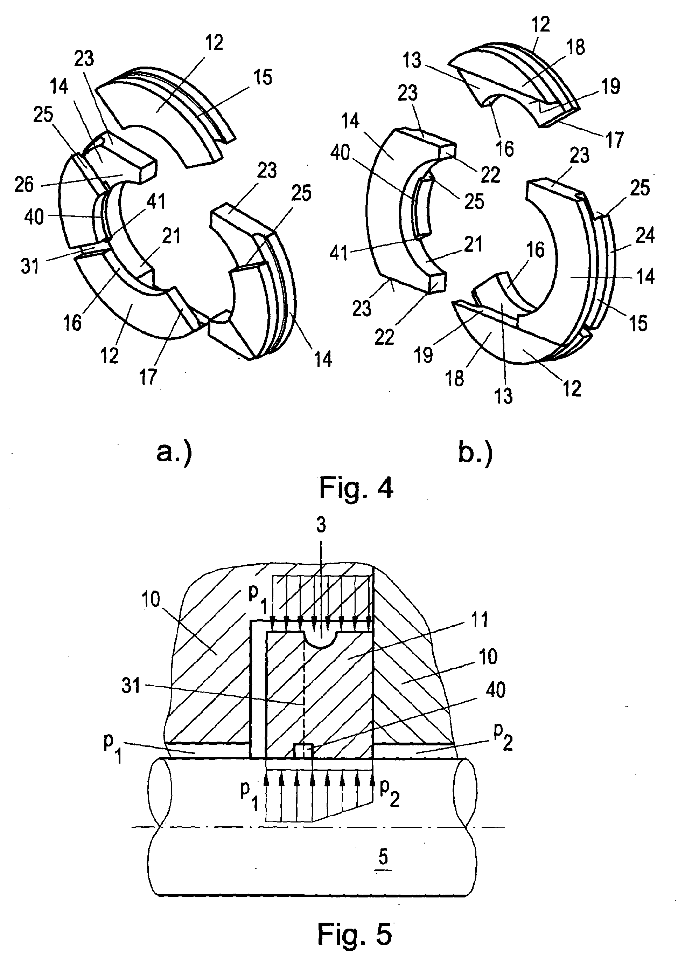

An einem erfindungsgemäßen Packungsring 11 lässt sich auch sehr einfach ein Druckausgleich realisieren, wie in Fig. 4 am Beispiel eines vierteiligen Packungsringes 11 gezeigt. In der inneren Umfangsfläche 21 der Dichtsegmente 14 wird dabei eine Umfangsnut 40 eingearbeitet, die sich im gezeigten Beispiel in Umfangsrichtung zwischen den beiden dritten radialen Endflächen 25 des Dichtsegments 14 erstreckt und im Bereich des zweiten Verschleißspaltes 31 über eine Ausnehmung 41 mit der zweiten radialen Dichtfläche 26 des Dichtsegments 14 verbunden ist. Somit wirkt der im Verschleißspalt 31 wirkende Druck auch in der Umfangsnut 40. Die dabei entstehende Druckverteilung wird nachfolgend anhand der Fig. 5 beschrieben.

Der mehrteilige Packungsring 11 ist in einer Packungskammer 3, z.B. wieder gebildet zwischen zwei axial nebeneinander liegenden Kammerscheiben 10 (analog zu Fig. 1), angeordnet. Dabei ist der axiale Vorsprung 24 der Dichtsegmente 14 der Seite mit dem hohen Druck p₁ zugewandt. Der Packungsring 11 wird wiederum durch den hohen Druck p₁ dichtend gegen die niederdruckseitige Wand der Packungskammer 3 gedrückt. An der radial äußeren Umfangsfläche wirkt der hohe Druck p₁ auf den Packungsring 1 und drückt diesen dichtend gegen die Kolbenstange 5. Durch die Verbindung der Umfangsnut 41 mit dem ersten Verschließspalt 31 und damit mit dem Raum mit hohen Druck p₁ wirkt in der Umfangsnut 41 ebenfalls der hohe Druck p₁. Zwischen Umfangsnut 41 und der Niederdruckseite wird der Druck auf den niedrigen Druck p₂ abgebaut. Damit kann die wirkende Flächenpressung zwischen Packungsring 11 und Kolbenstange 5 und folglich der Verschleiß reduziert werden.

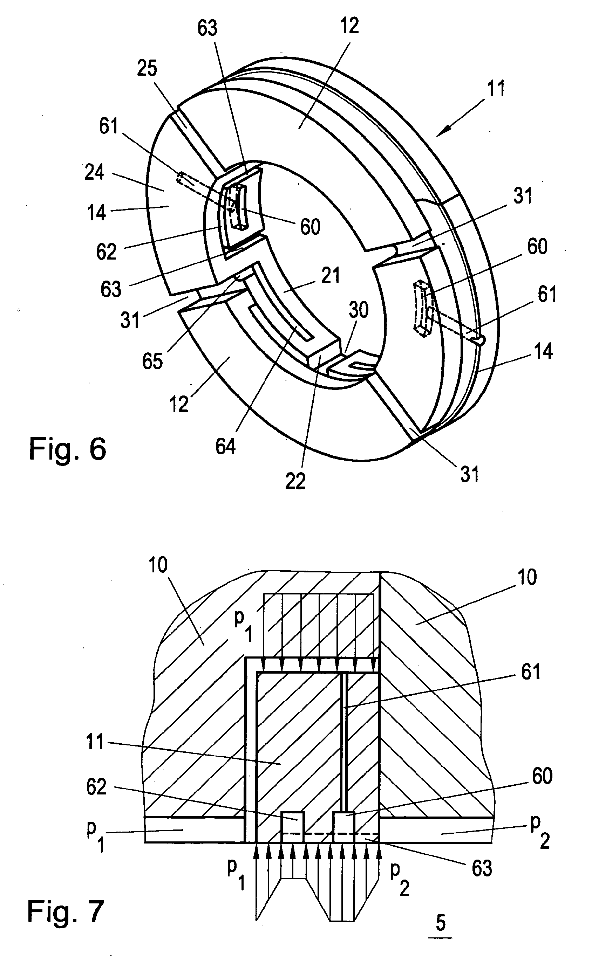

Eine weitere Möglichkeit des Druckausgleichs wird unter Bezugsnahme auf die Figs. 6 und 7 erläutert. Bei dieser Ausführung ist in der Umfangsfläche 21 eine Umfangsnut 64 zwischen dritter radialen Endfläche 25 und zweiten radialen Endfläche 22 vorgesehen. Diese Umfangsnut 64 ist im Bereich des zweiten Verschleißspaltes 31 über eine Ausnehmung 65 mit der zweiten radialen Dichtfläche 26 des Dichtsegments 14 verbunden, sodass in der Umfangsnut 64 der im Verschleißspalt 31 wirkende Druck wirkt. Eine solche Umfangsnut 64 kann dabei an beiden in Umfangsrichtung gesehenen Enden des Dichtsegments 14 vorgesehen sein. Die Wirkung dieser Umfangsnut(en) 64 ist dabei gleich wie oben zu den Figs. 4 und 5 beschrieben. Aufgrund der sich an der inneren Umfangsfläche 21 einstellenden Druckverteilung tendiert ein Packungsring 11 mit einem solchen Druckausgleich aber verstärkt zum Kippen und einem damit verbundenen ungleichmäßigen Verschleiß. Um die Kippneigung zu reduzieren, ist in der inneren Umfangsfläche 21 des Dichtsegments 14 im Bereich des axialen Vorsprungs 24 eine Hochdrucknut 60 vorgesehen, die über eine radiale Ausnehmung 61, vorzugsweise eine einfache Bohrung, mit der äußeren Umfangsfläche des Packungsringes 11 verbunden ist, sodass der an der äußeren Umfangsfläche wirkende Druck auch in der Hochdrucknut 60 ansteht. Alternativ könnte die Hochdrucknut 60 anstatt einer radialen Ausnehmung 61 auch im Bereich des zweiten Verschleißspaltes 31 über eine weitere axiale Ausnehmung mit der zweiten radialen Dichtfläche 26 des Dichtsegments 14 verbunden sein. Zwischen Hochdrucknut 60 und axialem Vorsprung 24, eigentlich Stirnseite des axialen Vorsprungs 24, ist weiters eine Niederdrucknut 62 vorgesehen, die über eine axiale Ausnehmung 63, hier zwei axiale in Umfangsrichtung neben der Hochdrucknut 60 angeordnete Nuten, mit der dem axialen Vorsprung 24 abgewandten Stirnseite des Packungsringes 11 verbunden ist, sodass in der Niederdrucknut 62 der an dieser Stirnseite wirkende Druck anliegt. Die Wirkung dieser Hoch- und Niederdrucknut 60, 62 ist der Fig. 7 zu entnehmen. An der äußeren Umfangsfläche des Packungsringes 11 wirkt wiederum der hohe Druck p₁ und folglich über die Ausnehmung 61 auch in der Hochdrucknut 60. Die zwischen Hochdrucknut 60 und der Seite mit dem hohen Druck p₁ angeordnete Niederdrucknut 62 ist über die Ausnehmung 63 mit der Seite des niedrigen Drucks p₂ verbunden, sodass in der Niederdrucknut 62 ebenfalls der niedrige Druck p₂ herrscht. Damit fällt der an der inneren Umfangsfläche 21 wirkende Druck im Bereich der Niederdrucknut 62 ab, um danach wieder auf den hohen Druck p₁ anzusteigen. Diese Druckverteilung wirkt somit einem Kippen der Dichtsegmente 14 durch die dem Druckausgleich dienenden Umfangsnut(en) 64 entgegen.

Die Anordnung einer Hoch- und Niederdrucknut 60, 62 in der inneren Umfangsfläche 21 des Dichtsegments 14 ist aber unabhängig von der Anordnung einer Umfangsnut 40, 64 zum Druckausgleich. Die Hoch- und Niederdrucknut 60, 62 könnten daher auch ohne Umfangsnut 40, 64 vorgesehen sein.

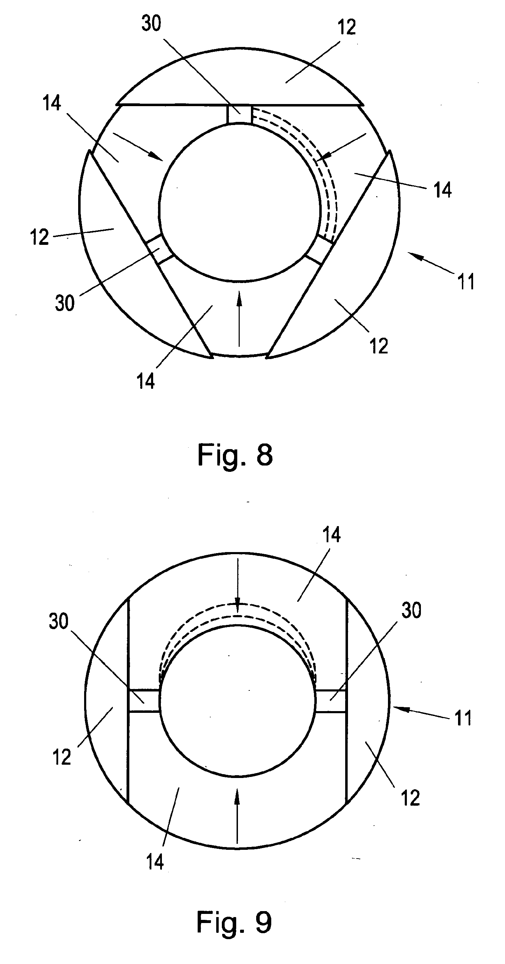

Mit fortlaufendem Verschleiß schieben sich die Dichtsegmente 14 zusammen, wie in Fig. 8 anhand eines sechsteiligen Packungsringes 11 gezeigt und durch die Pfeile angedeutet, wobei die strichlierten Linien den zunehmenden Verschleiß darstellen. Durch den Verschleiß werden bei einem solchen Packungsring 11 die Enden der Dichtsegmente 14 immer schwächer und verlieren damit an Steifigkeit. Bei einem vierteiligen Packungsring, wie oben beschrieben, schieben sich die Dichtsegmente 14 bei Verschleiß ebenfalls radial zusammen, wie in Fig. 9 gezeigt, wobei hier allerdings die Enden der Dichtsegmente 14 ihre Stärke beibehalten und sich somit die Steifigkeit der Enden nicht wesentlich ändert. Damit ist der Verschleiß in Segmentmitte, also im Bereich des axialen Vorsprungs 24, am größten. Da dort aber die volle Materialdicke zur Verfügung steht, kann damit der Verschleiß reduziert werden.

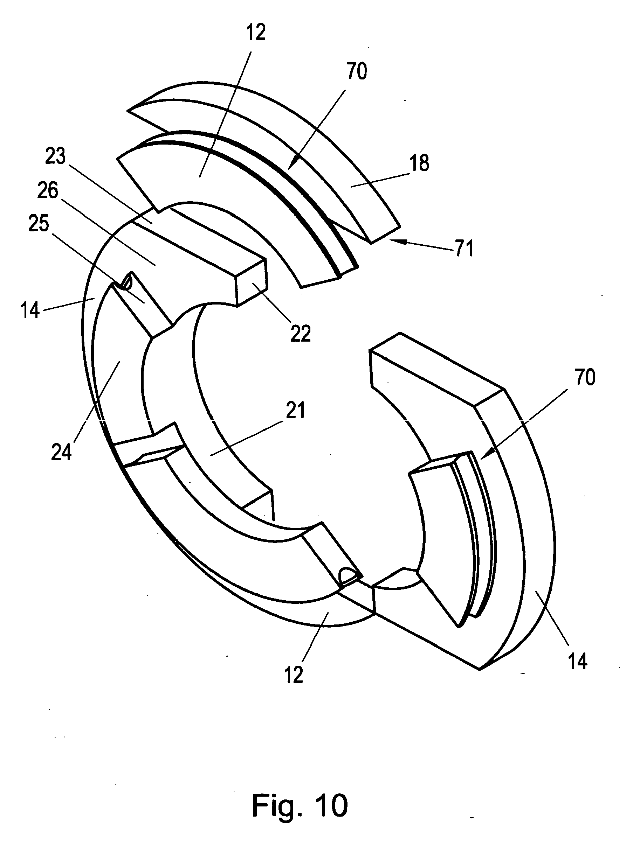

In einer weiteren vorteilhaften Ausgestaltung eines Packungsringes 11 ist an der Stirnseite des axialen Vorsprung 24 im radial äußeren Bereich des Packungsringes 11 eine radiale Stufe 70 vorgesehen, wie in Fig. 10 dargestellt. Damit ist zum Einen die axiale Schulter 18 nicht mehr durchgehend mit dem Ringsegment 12 verbunden, sondern die Enden 71 der Schulter 18 sind frei. Zum Anderen ist das Dichtsegment 14 dadurch im Bereich des axialen Vorsprungs 24 durch die radiale Stufe biegeweicher ausgeführt. Durch Ausbilden einer solchen radialen Stufe steht ein weiteres konstruktives Merkmal zur Verfügung, um die Dichtwirkung durch gezieltes Herbeiführen einer gewissen radialen Biegesteifigkeit der Segmente 12, 14 zu verbessern.

## Patentansprüche

1. Mehrteiliger Packungsring mit einer Anzahl von Ringsegmenten (12) und einer Anzahl von Dichtsegmenten (14), die dichtend aneinander liegend und einen Ring bildend angeordnet sind und radial innen gekrümmte Umfangsflächen (21) aufweisen, wobei die Ringsegmente (12) in Umfangsrichtung an beiden Enden durch erste radiale Endflächen (17) begrenzt sind und an den Ringsegmenten (12) im radial äußeren Bereich eine axial vorstehende Schulter (18) vorgesehen ist, die radial innen durch eine tangentiale Dichtfläche (19) begrenzt ist, **dadurch gekennzeichnet, dass** an den Dichtsegmenten (14) ein axialer Vorsprung (24) vorgesehen ist, der die radial innen liegende gekrümmte Umfangsfläche (21) des Dichtsegments (14) in axialer Richtung im Bereich des axialen Vorsprungs (24) verbreitert und der axiale Vorsprung (24) in Umfangsrichtung gesehen zwischen den Enden der Ringsegmente (12) und zur Ausbildung von ersten Verschleißspalten (31) beabstandet von den Enden der Ringsegmente (12) angeordnet ist.

2. Mehrteiliger Packungsring nach Anspruch 1, **dadurch gekennzeichnet, dass** an den Dichtsegmenten (14) an ihren in Umfangsrichtung gesehenen Enden je eine tangentiale Endfläche (23) und eine zweite radiale Endfläche (22) vorgesehen ist, wobei die tangentialen Endflächen (23) an den tangentialen Dichtflächen (19) benachbarter Ringsegmente (12) anliegen und die zweiten radialen Endflächen (22) zur Ausbildung eines zweiten Verschleißspaltes (30) einander zugewandt und beabstandet voneinander angeordnet sind.

3. Mehrteiliger Packungsring nach Anspruch 1 oder 2, **dadurch gekennzeichnet, dass** der axiale Vorsprung (24) in Umfangsrichtung durch dritte radiale Endflächen (25) begrenzt ist und die erste (17) und dritte radiale Endfläche (25) benachbarter Ring- und Dichtsegmente (12, 14) zur Ausbildung des ersten Verschleißspaltes (31) einander zugewandt und beabstandet angeordnet sind.

4. Mehrteiliger Packungsring nach einem der Ansprüche 1 bis 3, **dadurch gekennzeichnet, dass** der mehrteilige Packungsring (11) vierteilig mit zwei Ringsegmenten (12) und zwei Dichtsegmenten (14) ausgeführt ist, wobei die Ring- und Dichtsegmente (12, 14) jeweils gegenüberliegend angeordnet sind und die radial innen liegende Umfangsfläche (21) der Dichtsegmente (14) bis auf die zweiten Verschleißspalte (30) eine geschlossene Umfangsfläche bilden.

5. Mehrteiliger Packungsring nach einem der Ansprüche 1 bis 4, **dadurch gekennzeichnet, dass** an der radial innen liegenden Umfangsfläche (21) eines Dichtsegments (14) eine Umfangsnut (40, 64) vorgesehen ist, die über eine Ausnehmung (41, 65) im Bereich des ersten Verschleißspaltes (31) mit einer zweiten radialen Dichtfläche (26) des Dichtsegments (14) verbunden ist.

6. Mehrteiliger Packungsring nach einem der Ansprüche 1 bis 5, **dadurch gekennzeichnet, dass** an der radial innen liegenden Umfangsfläche (21) eines Dichtsegments (14) eine Hochdrucknut (60) vorgesehen ist, die über eine Ausnehmung (61) mit der äußeren Umfangsfläche des Packungsringes (11) oder über eine Ausnehmung im Bereich des zweiten Verschleißspaltes (30) mit einer zweiten radialen Dichtfläche (26) des Dichtsegments (14) verbunden ist und zwischen Hochdrucknut (60) und axialem Vorsprung (24) eine Niederdrucknut (62) vorgesehen ist, die über eine Ausnehmung (63) mit der dem axialen Vorsprung (24) abgewandten Stirnseite des Packungsringes (11) verbunden ist.

7. Mehrteiliger Packungsring nach einem der Ansprüche 1 bis 6, **dadurch gekennzeichnet, dass** in den Ringsegmenten (12) und Dichtsegmenten (14) an der Stirnseite mit dem axialen Vorsprung (24) im radial äußeren Bereich eine radiale Stufe (70) vorgesehen ist.

8. Druckpackung bestehend aus einem mehrteiligen Packungsring nach einem der Ansprüche 1 bis 7, der in einer Packungskammer (3) angeordnet ist, wobei der axiale Vorsprung (24) der Dichtsegmente (14) der Seite mit dem hohen Druck (p₁) zugewandt ist.

9. Abdichtung zwischen einer Kolbenstange (5) eines Kompressors und einem Kompressorgehäuse mit ein Anzahl von axial nebeneinander angeordneten Druckpackungen (2) jeweils bestehend aus einem mehrteiligen Packungsring (11) nach einem der Ansprüche 1 bis 7, der in einer Packungskammer (3) angeordnet ist, wobei der axiale Vorsprung (24) der Dichtsegmente (14) der Seite mit dem hohen Druck (p₁) zugewandt ist.

## Claims

1. Multipart packing ring having a number of annular segments (12) and a number of sealing segments (14) which are in sealing contact with one another and which are configured to form a ring, and which have radially inwardly curved circumferential surfaces (21), the annular segments (12) being bordered at both ends in the circumferential direction by first radial end faces (17), and an axially projecting shoulder (18) being provided on the annular segments (12) in the radially outward region which is radially inwardly bordered by a tangential sealing surface (19), **characterized in that** an axial projection (24) is provided on the sealing segments (14) which widens the radially inwardly situated curved circumferential surface (21) of the sealing segment (14) in the axial direction in the region of the axial projection (24), and the axial projection (24), viewed in the circumferential direction, is situated between the ends of the annular segments (12), and for forming first wear gaps (31) is located at a distance from the ends of the annular segments (12).

2. Multipart packing ring according to Claim 1, **characterized in that** a tangential end face (23) and a second radial end face (22) are each provided on the sealing segments (14), at their ends as viewed in the circumferential direction, wherein the tangential end faces (23) rest against the tangential sealing surfaces (19) of adjacent annular segments (12), and the second radial end faces (22) for forming a second wear gap (30) face one another and are located at a distance from one another.

3. Multipart packing ring according to Claim 1 or 2, **characterized in that** the axial projection (24) is bordered in the circumferential direction by third radial end faces (25), and the first radial end face (17) and third radial end face (25) of adjacent annular segments and sealing segments (12, 14), respectively, for forming the first wear gap (31) face one another and are located at a distance from one another.

4. Multipart packing ring according to one of Claims 1 through 3, **characterized in that** the multipart packing ring (11) is designed in four parts, having two annular segments (12) and two sealing segments (14), the annular segments and sealing segments (12, 14), respectively, being situated opposite one another, and the radially inwardly situated circumferential surface (21) of the sealing segments (14) forming a closed circumferential surface until reaching the second wear gap (30).

5. Multipart packing ring according to one of Claims 1 through 4, **characterized in that** a circumferential groove (40, 64) is provided at the radially inwardly situated circumferential surface (21) of a sealing segment (14), and is connected to a second radial sealing surface (26) of the sealing segment (14) via a recess (41, 65) in the region of the first wear gap (31).

6. Multipart packing ring according to one of Claims 1 through 5, **characterized in that** a high-pressure groove (60) is provided at the radially inwardly situated circumferential surface (21) of a sealing segment (14) and is connected to the outer circumferential surface of the packing ring (11) via a recess (61), or is connected to a second radial sealing surface (26) of the sealing segment (14) via a recess in the region of the second wear gap (30), and a low-pressure groove (62) is provided between the high-pressure groove (60) and the axial projection (24), and is connected to the end face of the packing ring (11) facing away from the axial projection (24) via a recess (63).

7. Multipart packing ring according to one of Claims 1 through 6, **characterized in that** a radial step (70) is provided in the radially outward region in the annular segments (12) and sealing segments (14) at the end face having the axial projection (24).

8. Pressure packing composed of a multipart packing ring according to one of Claims 1 through 7, which is situated in a packing chamber (3), wherein the axial projection (24) of the sealing segments (14) faces the side having the high pressure (p₁).

9. Seal between a piston rod (5) of a compressor and a compressor housing, having a number of axially adjacent pressure packings (2), each composed of a multipart packing ring (11) according to one of Claims 1 through 7, and which is situated in a packing chamber (3), wherein the axial projection (24) of the sealing segments (14) faces the side having the high pressure (p₁).

## Revendications

1. Anneau de garniture en plusieurs parties comportant un ensemble de segments d'anneau (12) et un ensemble de segments d'étanchéité (14) qui sont agencés en contact les uns avec les autres de manière étanche et en formant un anneau et comportent des surfaces circonférentielles radialement incurvées vers l'intérieur (21), dans lequel les segments d'anneau (12) sont délimités dans une direction circonférentielle aux deux extrémités par des premières surfaces d'extrémité radiales (17), et un épaulement axialement en saillie (18), lequel est délimité radialement vers l'intérieur par une surface d'étanchéité tangentielle (19), est prévu sur les segments d'anneau (12) dans la zone radialement extérieure, **caractérisé en ce qu'**une saillie axiale (24) est prévue sur les segments d'étanchéité (14), ladite saillie élargit la surface circonférentielle incurvée radialement vers l'intérieur (21) du segment d'étanchéité (14) dans une direction axiale dans la zone de la saillie axiale (24), et la saillie axiale (24) est agencée dans une direction circonférentielle lorsque vue entre les extrémités des segments d'anneau (12) et de manière à former des premiers espaces d'usure (31) écartés des extrémités des segments d'anneau (12).

2. Anneau de garniture en plusieurs parties selon la revendication 1, **caractérisé en ce qu'**une surface d'extrémité tangentielle (23) et une deuxième surface d'extrémité radiale (22) sont prévues sur chacun des segments d'étanchéité (14) au niveau de leurs extrémités vues dans la direction circonférentielle, dans lequel les surfaces d'extrémité tangentielles (23) sont en butée contre les surfaces d'étanchéité tangentielles (19) de segments d'anneau voisins (12), et les deuxièmes surfaces d'extrémité radiales (22) sont agencées dirigées l'une vers l'autre et écartées l'une de l'autre de manière à former un second espace d'usure (30).

3. Anneau de garniture en plusieurs parties selon l'une des revendications 1 ou 2, **caractérisé en ce que** la saillie axiale (24) est délimitée dans la direction circonférentielle par des troisièmes surfaces d'extrémité radiales (25), et les première (17) et troisième (25) surfaces d'extrémité radiales de segments d'anneau et d'étanchéité (12, 14) adjacents sont agencées dirigées l'une vers l'autre et écartées l'une de l'autre de manière à former le premier espace d'usure (31).

4. Anneau de garniture en plusieurs parties selon l'une quelconque des revendications 1 à 3, **caractérisé en ce que** l'anneau d'étanchéité en plusieurs parties (11) est réalisé en quatre parties avec deux segments d'anneau (12) et deux segments d'étanchéité (14), dans lequel les segments d'anneau et d'étanchéité (12, 14) sont chacun agencés l'un en face de l'autre, et la surface circonférentielle radialement vers l'intérieur (21) des segments d'étanchéité (14) forme une surface circonférentielle fermée jusqu'au second espace d'usure (30).

5. Anneau de garniture en plusieurs parties selon l'une quelconque des revendications 1 à 4, **caractérisé en ce qu'**une rainure circonférentielle (40, 64) est prévue sur la surface circonférentielle radialement vers l'intérieur (21) d'un segment d'étanchéité (14), ladite rainure circonférentielle étant reliée à une seconde surface d'étanchéité radiale (26) du segment d'étanchéité (14) par l'intermédiaire d'un évidement (41, 65) dans la zone du premier espace d'usure (31).

6. Anneau de garniture en plusieurs parties selon l'une quelconque des revendications 1 à 5, **caractérisé en ce qu'**une rainure sous haute pression (60) est prévue sur la surface circonférentielle radialement vers l'intérieur (21) d'un segment d'étanchéité (14), ladite rainure sous haute pression étant reliée à la surface circonférentielle extérieure de l'anneau de garniture (11) par l'intermédiaire d'un évidement (61), ou à une seconde surface d'étanchéité radiale (26) du segment d'étanchéité (14) par l'intermédiaire d'un évidement dans la zone du second espace d'usure (30), et une rainure sous basse pression (62) est prévue entre la rainure sous haute pression (60) et la saillie axiale (24), ladite rainure sous basse pression étant reliée à la face avant opposée à la saillie axiale (24) de l'anneau de garniture (11) par l'intermédiaire d'un évidement (63).

7. Anneau de garniture en plusieurs parties selon l'une quelconque des revendications 1 à 6, **caractérisé en ce qu'**un gradin radial (70) est prévu dans les segments d'anneau (12) et les segments d'étanchéité (14) sur la face avant avec la saillie axiale (24) dans la zone radialement extérieure.

8. Garniture sous pression constituée d'un anneau de garniture en plusieurs parties selon l'une quelconque des revendications 1 à 7, lequel anneau étant agencé dans une chambre de garniture (3), la saillie axiale (24) des segments d'étanchéité (14) étant dirigée vers le côté sous haute pression (p₁).

9. Joint entre une tige de piston (5) d'un compresseur et un carter de compresseur, comportant un ensemble de garnitures sous pression (2) agencées axialement les unes à côté des autres, respectivement constituées d'un anneau de garniture en plusieurs parties (11) selon l'une quelconque des revendications 1 à 7 qui est agencé dans une chambre de garniture (3), la saillie axiale (24) des segments d'étanchéité (14) étant dirigée vers le côté sous haute pression (p₁).
